# EUROPÄISCHE PATENTANMELDUNG

(11) **EP 1 404 064 A1**
(43) Veröffentlichungstag der Anmeldung: **31.03.2004**
(21) Anmeldenummer: 02021494.6
(22) Anmeldetag: 25.09.2002
(51) Int. Cl.: H04L 12/56, H04Q 7/38

(54) **Verfahren zur Zuordnung von Funkübertragungsressourcen für gleichzeitig leitungs- und packetvermittelte Datenübertragung**

(71) Anmelder: SIEMENS AKTIENGESELLSCHAFT, 80333 München (DE)
(72) Erfinder: Brand, Bernd, 81475 München (DE); Faerber, Michael, 82515 Wolfratshausen (DE); Gessner, Christina, 81373 München (DE)

(57) **Zusammenfassung**

Die Erfindung betrifft ein Verfahren zur Zuordnung von Funkübertragungsressourcen in einem Funkkommunikationssystem, bei dem für eine leitungsvermittelte Datenübertragung einem Teilnehmer Funkübertragungsressourcen mit Hilfe einer ersten Kontrolleinrichtung (RRM) zugeordnet werden und bei dem für eine paketvermittelte Datenübertragung dem gleichen Teilnehmer Funkübertragungsressourcen mit Hilfe einer zweiten Kontrolleinrichtung (MAC) zugeordnet werden.
Erfindungsgemäß wird bei einer gleichzeitig durchzuführenden leitungsvermittelten und paketvermittelten Datenübertragung die Zuordnung der jeweiligen Funkübertragungsressourcen voneinander abhängig durchgeführt.

## Beschreibung

Die Erfindung betrifft ein Verfahren zur Zuordnung von Funkübertragungsressourcen in einem Funkkommunikationssystem, bei dem für eine leitungsvermittelte Datenübertragung einem Teilnehmer Funkübertragungsressourcen mit Hilfe einer ersten Kontrolleinrichtung zugeordnet werden und bei dem für eine paketvermittelte Datenübertragung dem gleichen Teilnehmer Funkübertragungsressourcen mit Hilfe einer zweiten Kontrolleinrichtung zugeordnet werden.

An Funkkommunikationssysteme werden durch Einführung neuer Dienste immer höhere Anforderungen sowohl an leitungsvermittelte als auch an paketvermittelte Datenübertragungen gestellt. Will ein Teilnehmer gleichzeitig zwei Dienste in Anspruch nehmen, von denen Daten eines ersten Dienstes leitungsvermittelt und Daten eines zweiten Dienstes paketvermittelt übertragen werden, so soll die jeweilige Übertragung auch bei einem Zellwechsel des Teilnehmers oder bei einem vom Teilnehmer neu angeforderten Verbindungsaufbau zuverlässig und unterbrechungsfrei erfolgen.

Bei einem GSM/GPRS-Funkkommunikationssystem beispielsweise werden Zeitschlitze als Funkübertragungsressourcen für eine leitungsvermittelte Datenübertragung mit Hilfe eines Radio-Ressource-Control-Protokolls und für eine paketvermittelte Datenübertragung mit Hilfe eines Media-Access-Control-Protokolls zugeordnet.

Wird gleichzeitig sowohl eine leitungsvermittelte Datenübertragung als auch eine paketvermittelte Datenübertragung zu einem Teilnehmer durchgeführt, so wird bei einem "Handover", bei dem der Teilnehmer einen Zellwechsel vornimmt, lediglich die leitungsvermittelte Datenübertragung bzw. Verbindung aufrechterhalten, während die paketvermittelte Datenübertragung abgebrochen wird. Nach Beendigung des "Handovers" wird die paketvermittelte Datenübertragung zum Teilnehmer von neuem eingerichtet.

Werden zu einem Teilnehmer lediglich paketvermittelte Daten übertragen und wird vom Teilnehmer zusätzlich eine leitungsvermittelte Datenübertragung angefordert, so wird die paketvermittelte Datenübertragung abgebrochen und die leitungsvermittelte Datenübertragung bevorzugt eingerichtet. Nachfolgend wird dann die paketvermittelte Datenübertragung zum Teilnehmer erneut eingerichtet.

Die Benachteiligung von paketvermittelten Datenübertragungen in den oben beschriebenen Fällen ist bei neu eingeführten Diensten, die auf sogenannten "Real-Time"-Anforderungen basieren, nicht mehr akzeptabel.

Die Erfindung hat daher die Aufgabe, ein verbessertes Verfahren für eine Zuordnung von Funkübertragungsressourcen zu einem Teilnehmer eines Funkkommunikationssystems anzugeben, um sowohl eine leitungsvermittelte als auch eine zugleich erfolgende paketvermittelte Datenübertragung zum Teilnehmer zuverlässig und unterbrechungsfrei zu realisieren.

Die Aufgabe der Erfindung wird durch die Merkmale des Patentanspruchs 1 gelöst. Vorteilhafte Weiterbildungen sind in den Unteransprüchen angegeben.

Beim erfindungsgemäßen Verfahren werden Funkübertragungsressourcen sowohl für eine leitungsvermittelte als auch für eine paketvermittelte Datenübertragung jeweils in gegenseitiger Abhängigkeit zueinander einem Teilnehmer zugeordnet. Dadurch werden sowohl leitungsvermittelte als auch paketvermittelte Datenübertragungen gleichberechtigt behandelt.

Unterbrechungen von paketvermittelten Datenübertragungen, die bislang beispielsweise bei einem Funkzellenwechsel auftraten, sind mit Hilfe des erfindungsgemäßen Verfahrens vermeidbar.

Eine Einführung von auf Real-Time-Anforderungen basierenden Diensten wird durch das erfindungsgemäße Verfahren mit geringem Aufwand ermöglicht.

Durch das erfindungsgemäße Verfahren werden auch mobile Teilnehmer, deren Endgeräte nicht über Schnittstellen zur Durchführung des erfindungsgemäßen Zuordnungsverfahrens verfügen, nicht benachteiligt, weshalb eine nachträgliche Einführung des erfindungsgemäßen Verfahrens in bereits bestehende Funkkommunikationsstandards ermöglicht wird.

Im folgenden wird ein Ausführungsbeispiel der vorliegenden Erfindung anhand einer Zeichnung näher erläutert. Dabei zeigt:
- FIG 1: anhand eines Ablaufdiagramms eine erste Ausgestaltungsform des erfindungsgemäßen Verfahrens für einen Teilnehmer eines GSM/GPRS-Funkkommunikationssystems, unter der Voraussetzung einer zusätzlich zu einer paketvermittelten Datenübertragung einzurichtenden leitungsvermittelten Datenübertragung zum Teilnehmer,
- FIG 2: anhand eines Ablaufdiagramms eine zweite Ausgestaltungsform des erfindungsgemäßen Verfahrens im Vergleich zu FIG 1,
- FIG 3: anhand eines Ablaufdiagramms eine dritte Ausgestaltungsform des erfindungsgemäßen Verfahrens im Vergleich zu FIG 2,
- FIG 4: anhand eines Ablaufdiagramms eine vierte Ausgestaltungsform des erfindungsgemäßen Verfahrens im Vergleich zu FIG 1,
- FIG 5: anhand eines Ablaufdiagramms eine fünfte Ausgestaltungsform des erfindungsgemäßen Verfahrens im Vergleich zu FIG 4,
- FIG 6: anhand eines Ablaufdiagramms eine sechste Ausgestaltungsform des erfindungsgemäßen Verfahrens für einen Teilnehmer eines GSM/GPRS-Funkkommunikationssystems, unter der Voraussetzung einer zusätzlich zu einer leitungsvermittelten Datenübertragung einzurichtenden paketvermittelten Datenübertragung zu einem Teilnehmer eines GSM/GPRS-Funkkommunikationssystems, und
- FIG 7: anhand eines Ablaufdiagramms eine siebte Ausgestaltungsform des erfindungsgemäßen Verfahrens im Vergleich zu FIG 6.

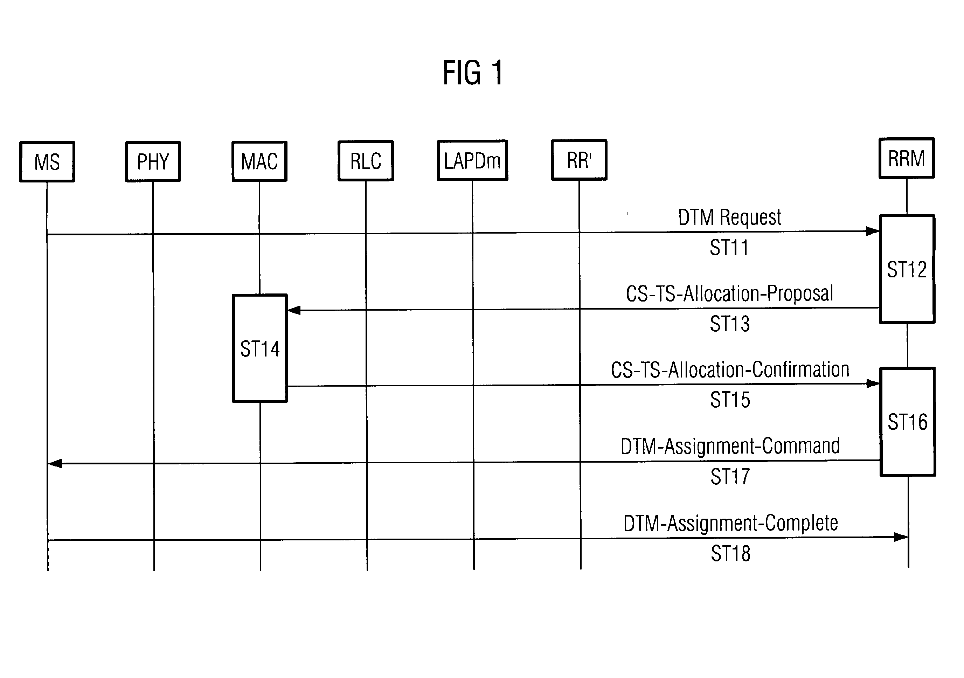

FIG 1 zeigt anhand eines Ablaufdiagramms eine erste Ausgestaltungsform des erfindungsgemäßen Verfahrens für einen Teilnehmer MS eines GSM/GPRS-Funkkommunikationssystems, unter der Voraussetzung einer zusätzlich zu einer paketvermittelten Datenübertragung einzurichtenden leitungsvermittelten Datenübertragung zum Teilnehmer MS.

Im folgenden werden stellvertretend typische Ebenen (Layer) eines GSM/GPRS-Funkkommunikationssystems gezeigt, wobei folgende Abkürzungen gelten:
- PHY: für einen Physical-Layer,
- RLC: für einen Radio-Link-Control-Layer,
- LAPDm: für einen sogenannten modifizierten Link-Access-Protocol-D-Kanal-Layer und
- RR': für einen sogenannten abgesetzten Radio-Ressource-Management-Layer.

Unter der Vorraussetzung, dass zum mobilen Teilnehmer MS bereits eine paketvermittelte Datenübertragung PS erfolgt, soll zusätzlich eine leitungsvermittelte Datenübertragung CS, wie beispielsweise eine Sprachdatenübertragung, zum Teilnehmer MS eingerichtet werden.

Eine entsprechende Anforderung DTM-Request des Teilnehmers MS gelangt an eine seitens eines Basisstationscontrollers BSC angeordnete erste Kontrolleinrichtung RRM - Schritt ST11. Die erste Kontrolleinrichtung RRM ist für eine Zuordnung von Funkübertragungsressourcen bzw. Zeitschlitzen für die neu einzurichtende leitungsvermittelte Datenübertragung CS verantwortlich.

Aufgrund des GSM/GPRS-Standards ist bei der ersten Kontrolleinrichtung RRM bekannt, dass zum Teilnehmer MS bereits eine paketvermittelte Datenübertragung PS erfolgt.

Die erste Kontrolleinrichtung RRM stellt eine Auswahl an zur Verfügung stehenden freien Zeitschlitzen TS für die einzurichtende leitungsvermittelte Datenübertragung CS zusammen-Schritt ST12 - und übermittelt diese ausgewählten freien Zeitschlitze TS anhand einer Meldung CS-TS-Allocation-Proposal einschließlich einer Identifizierung des Teilnehmers MS an eine zweite Kontrolleinrichtung MAC - Schritt ST13.

Die zweite Kontrolleinrichtung MAC ist ebenfalls seitens des Basisstationscontrollers BSC angeordnet, wobei die zweite Kontrolleinrichtung MAC für eine Zuordnung von Zeitschlitzen für die paketvermittelte Datenübertragung PS verantwortlich ist.

Die zweite Kontrolleinrichtung MAC wählt nun basierend auf der Meldung CS-TS-Allocation-Proposal mindestens einen der dort angegebenen Zeitschlitze aus, die zu den Zeitschlitzen, die dem Teilnehmer MS zur Durchführung der paketvermittelten Datenübertragung PS bereits zugeordnet wurden, korrespondieren bzw. optimal korrespondieren- Schritt ST14.

Dabei sind unter korrespondierenden Zeitschlitzen diejenigen Zeitschlitze zu verstehen, bei deren Auswahl beispielsweise Übertragungskapazität, dem Teilnehmer bereits zugeordnete Funkübertragungsressourcen wie Zeitschlitze und/oder Trägerfrequenzen und/oder Codes (beispielsweise bei einem CDMA-Funkkommunikationssystem), Quality-of-Service Anforderungen, Eigenschaften des Funkübertragungskanals bzw. weitere, vom verwendeten Funkübertragungsstandard (hier GSM/GPRS) abhängige Parameter einzeln oder in Kombination zueinander berücksichtigt werden.

Der mindestens eine ausgewählte Zeitschlitz wird von der zweiten Kontrolleinrichtung MAC an die erste Kontrolleinrichtung RRM anhand einer Meldung CS-TS-Allocation-Confirmation zurückgemeldet - Schritt ST15. Die erste Kontrolleinrichtung RRM ordnet diesen mindestens einen Zeitschlitz der einzurichtenden leitungsvermittelten Datenübertragung zum Teilnehmer MS zu - Schritt ST16 - und informiert den Teilnehmer MS über die Zuordnung bzw. über eine entsprechend neu gewählte Kanalkonfiguration mit Hilfe einer Meldung DTM-Assignment-Command
- Schritt ST 17.
   Abschließend erfolgt eine Bestätigung des Teilnehmers MS an die erste Kontrolleinrichtung RRM mit Hilfe einer Meldung DTM-Assignment-Complete - Schritt ST18.

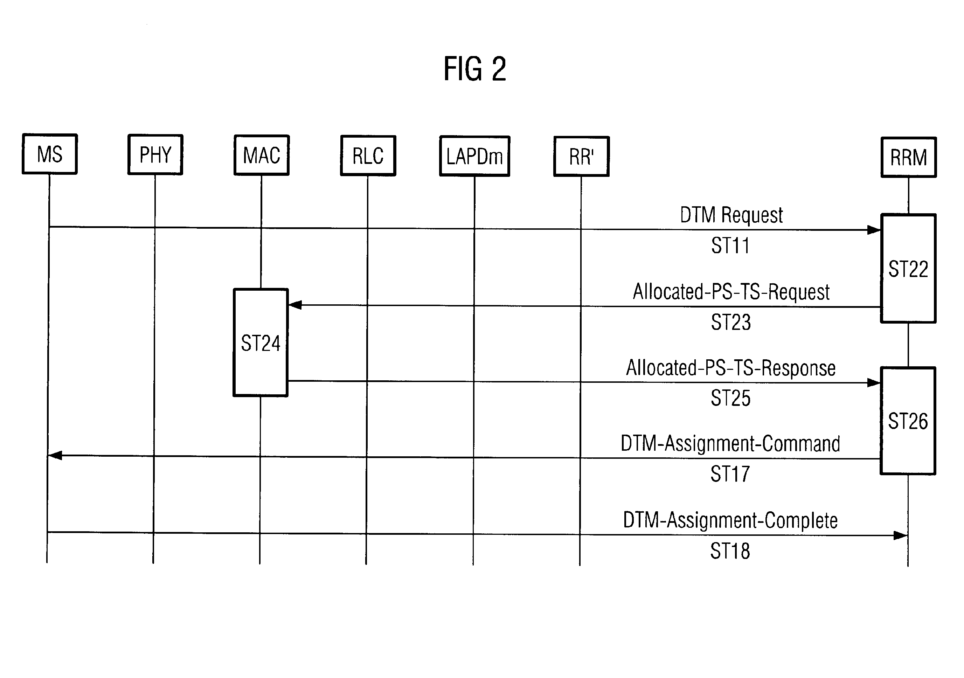

   FIG 2 zeigt anhand eines Ablaufdiagramms eine zweite Ausgestaltungsform des erfindungsgemäßen Verfahrens, vergleichend zu FIG 1.

Unter der in FIG 1 geschilderten Voraussetzung werden hier abweichend zum in FIG 1 dargestellten Schritt ST12 seitens der ersten Kontrolleinrichtung RRM Informationen bezüglich derjenigen Zeitschlitze benötigt, die dem Teilnehmer MS zur Durchführung der paketvermittelten Datenübertragung bereits zugeordnet sind - Schritt ST22. Aus diesem Grund erfolgt eine Anfrage Allocated-PS-TS-Request von der ersten Kontrolleinrichtung RRM zur zweiten Kontrolleinrichtung MAC - Schritt ST23.

Die zweite Kontrolleinrichtung MAC stellt die der paketvermittelten Datenübertragung zugeordneten Zeitschlitze zusammen - Schritt ST24 - und meldet diese mit Hilfe einer Meldung Allocated-PS-TS-Response an die erste Kontrolleinrichtung RRM zurück - Schritt ST25.

Die erste Kontrolleinrichtung RRM wählt nun mindestens einen Zeitschlitz zur Durchführung der leitungsvermittelten Datenübertragung derart aus, dass er zu den zurückgemeldeten Zeitschlitzen, die dem Teilnehmer MS zur Durchführung der paketvermittelten Datenübertragung bereits zugeordnet sind, korrespondiert bzw. optimal korrespondiert - Schritt ST26.

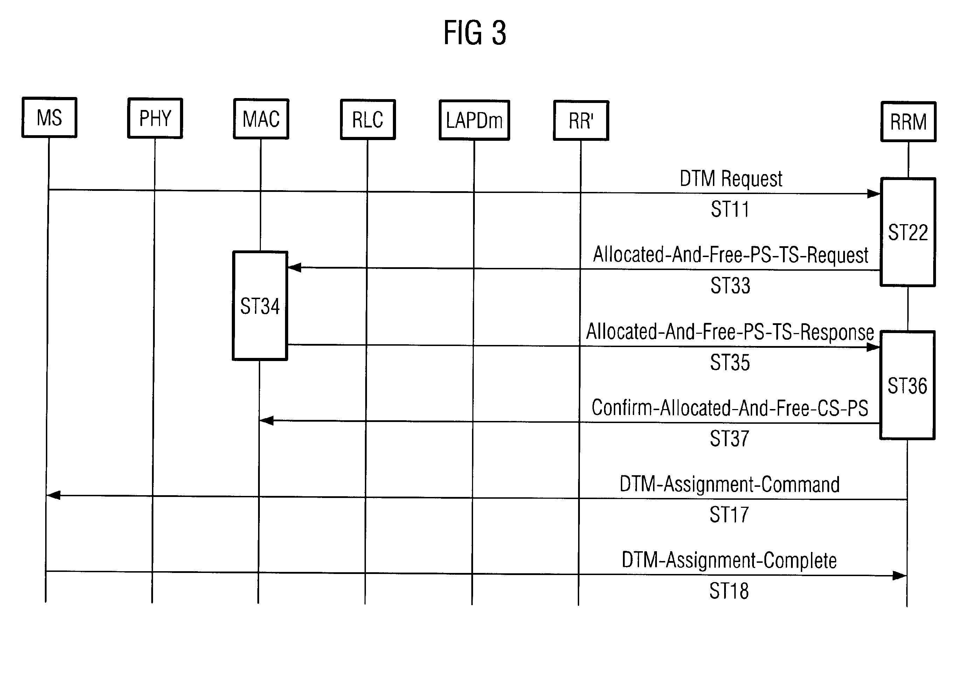

FIG 3 zeigt anhand eines Ablaufdiagramms eine dritte Ausgestaltungsform des erfindungsgemäßen Verfahrens im Vergleich zu FIG 2.

Abweichend zum in FIG 2 dargestellten Schritt ST23 werden seitens der ersten Kontrolleinrichtung RRM jetzt sowohl dem Teilnehmer MS für die Paketdatenübertragung bereits zugeordnete als auch freie Zeitschlitze bei der zweiten Kontrolleinrichtung MAC mit Hilfe einer Meldung Allocated-And-Free-PS-TS-Request abgefragt - Schritt ST33. Die zweite Kontrolleinrichtung MAC stellt die derart ermittelten Zeitschlitze zusammen - Schritt ST34 - und meldet diese anhand einer Meldung Allocated-And-Free-PS-TS-Response an die erste Kontrolleinrichtung RRM zurück - Schritt ST35.

Die erste Kontrolleinrichtung RRM wählt nun mindestens einen Zeitschlitz zur Durchführung der leitungsvermittelten Datenübertragung derart aus, dass er zu den zurückgemeldeten Zeitschlitzen korrespondiert bzw. optimal korrespondiert-Schritt ST36 - und sendet eine Meldung Confirm-Allocated-And-Free-PS-TS an die zweite Kontrolleinrichtung MAC zurück-Schritt ST37.

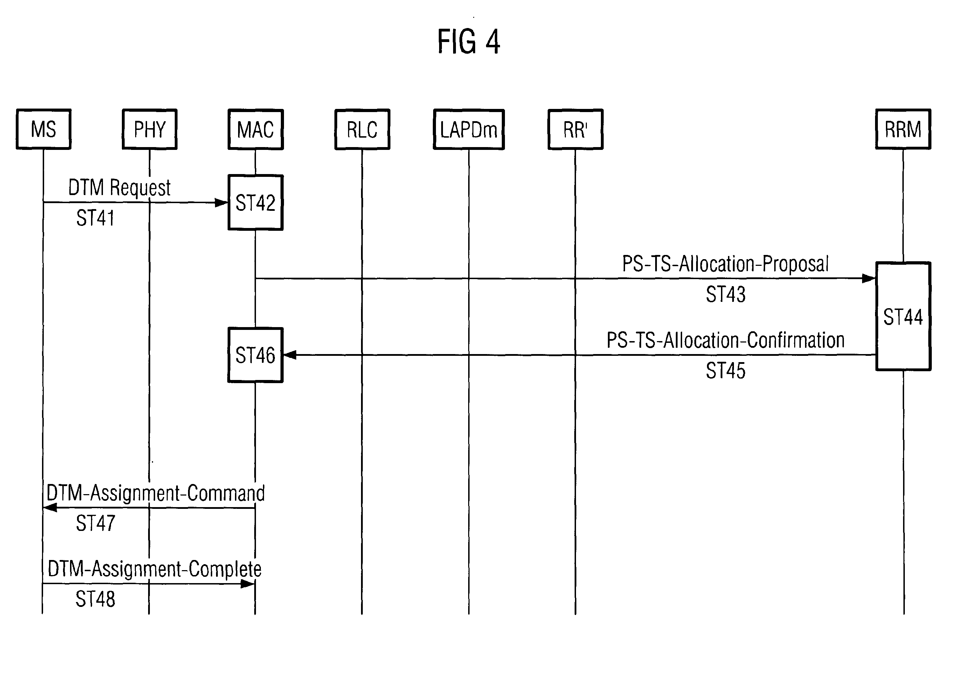

FIG 4 zeigt anhand eines Ablaufdiagramms eine vierte Ausgestaltungsform des erfindungsgemäßen Verfahrens im Vergleich zu FIG 1.

Unter der Voraussetzung, dass zum mobilen Teilnehmer MS bereits eine paketvermittelte Datenübertragung PS erfolgt, soll zusätzlich eine leitungsvermittelte Datenübertragung CS zum Teilnehmer MS eingerichtet werden. Eine entsprechende Anforderung DTM-Request des Teilnehmers MS gelangt an die zweite Kontrolleinrichtung MAC - Schritt ST41.

Diese ordnet für die paketvermittelte Datenübertragung Zeitschlitze zu - Schritt ST42. Die derart zugeordneten Zeitschlitze werden mit Hilfe einer Meldung PS-TS-Allocation-Proposal an die erste Kontrolleinrichtung RRM gemeldet-Schritt ST43.

Die erste Kontrolleinrichtung RRM wählt für die einzurichtende kanalvermittelte Datenübertragung mindestens einen Zeitschlitz derart aus, dass dieser zu den gemeldeten, der paketvermittelten Datenübertragung zugeordneten Zeitschlitzen korrespondiert bzw. optimal korrespondiert - Schritt ST44.

Die erste Kontrolleinrichtung RRM sendet eine Meldung PS-TS-Allocation-Confirmation an die zweite Kontrolleinrichtung MAC zurück, die Informationen über die der leitungsvermittelten Datenübertragung zugeordneten Zeitschlitze enthält - Schritt ST45.

Die zweite Kontrolleinrichtung MAC ordnet basierend auf dieser Information gegebenenfalls für die paketvermittelte Datenübertragung Zeitschlitze neu zu - Schritt ST46 - und informiert den Teilnehmers MS über die neue Kanalkonfiguration bzw. über die Zuordnung mit Hilfe einer Meldung DTM-Assignment-Command - Schritt ST47.

Abschließend wird in Schritt ST48 eine Meldung DTM-Assignment-Complete vom Teilnehmer MS zur zweiten Kontrolleinrichtung MAC übertragen.

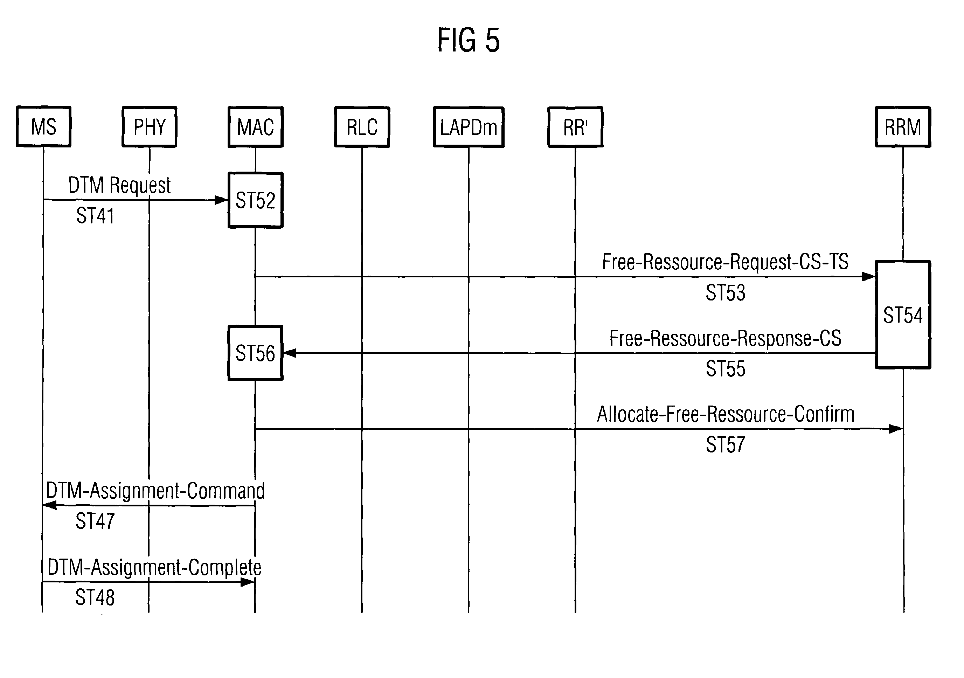

FIG 5 zeigt anhand eines Ablaufdiagramms eine fünfte Ausgestaltungsform des erfindungsgemäßen Verfahrens im Vergleich zu FIG 4.

Abweichend zum in FIG 4 beschriebenen Schritt ST42 werden seitens der zweiten Kontrolleinrichtung MAC Informationen bezüglich freier Zeitschlitze der ersten Kontrolleinrichtung RRM benötigt - Schritt ST52 - weshalb eine Anfrage Free-Ressource-Request-CS-TS von der zweiten Kontrolleinrichtung MAC zur ersten Kontrolleinrichtung RRM erfolgt - Schritt ST53.

Die erste Kontrolleinrichtung RRM stellt freie Zeitschlitze zusammen - Schritt ST54 - und meldet diese anhand einer Meldung Free-Ressource-Response-CS an die zweite Kontrolleinrichtung MAC zurück - Schritt ST55.

Die zweite Kontrolleinrichtung MAC wählt daraus in Abhängigkeit von den zugeordneten Zeitschlitzen der bereits eingerichteten paketvermittelten Datenübertragung entsprechend mindestens einen korrespondierenden bzw. optimal korrespondierenden Zeitschlitz aus - Schritt ST56 - und meldet diese(n) mit Hilfe einer Meldung Allocate-Free-Ressource-Confirm an die erste Kontrolleinrichtung RRM zurück - Schritt ST57. Seitens der ersten Kontrolleinrichtung werden diese zurückgemeldeten Zeitschlitze dann der einzurichtenden leitungsvermittelten Datenübertragung zugeordnet.

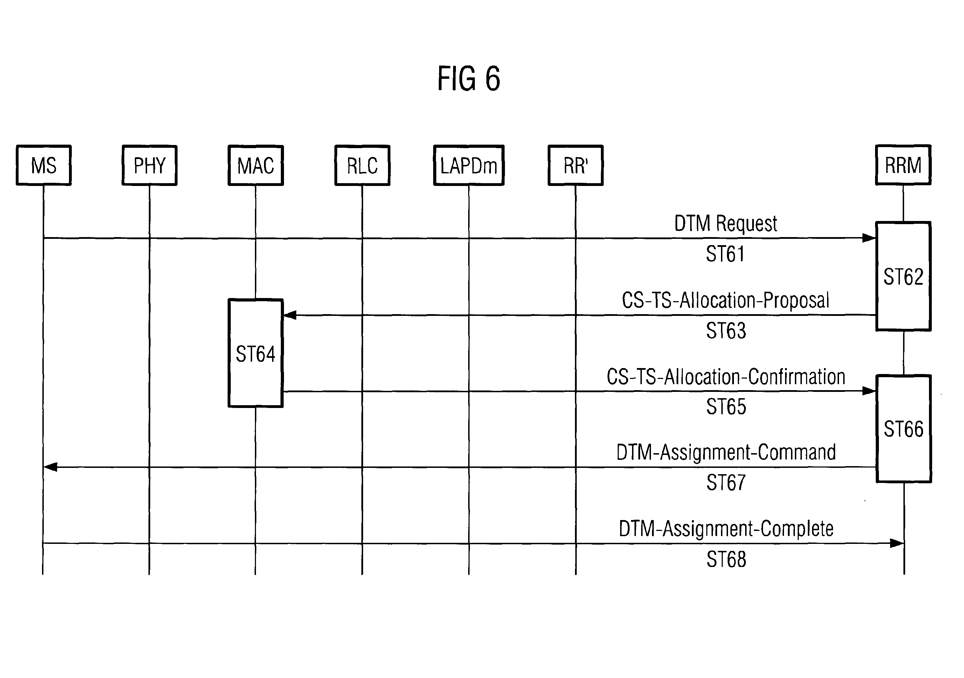

FIG 6 zeigt anhand eines Ablaufdiagramms eine sechste Ausgestaltungsform des erfindungsgemäßen Verfahrens für einen Teilnehmer eines GSM/GPRS-Funkkommunikationssystems, unter der Voraussetzung einer zusätzlich zu einer leitungsvermittelten Datenübertragung CS einzurichtenden paketvermittelten Datenübertragung PS zu einem Teilnehmer MS eines GSM/GPRS-Funkkommunikationssystems.

Eine entsprechende Anforderung DTM-Request des Teilnehmers MS gelangt an die erste Kontrolleinrichtung RRM - Schritt ST61.

Die erste Kontrolleinrichtung RRM stellt sowohl freie Zeitschlitze als auch die dem Teilnehmer MS zur Durchführung der leitungsvermittelten Datenübertragung zugeordneten Zeitschlitzen zusammen - Schritt ST62 - und übermittelt diese anhand einer Meldung CS-TS-Allocation-Proposal einschließlich einer Identifizierung des Teilnehmers MS an die zweite Kontrolleinrichtung MAC - Schritt ST63.

Die zweite Kontrolleinrichtung MAC wählt mindestens einen Zeitschlitz für die einzurichtende paketvermittelte Datenübertragung derart aus, dass dieser zu den Zeitschlitzen, die dem Teilnehmer MS für die kanalvermittelte Datenübertragung bereits zugeordnet sind, korrespondiert bzw. optimal korrespondiert - Schritt ST64. Bei dieser Auswahl werden wiederum sowohl Übertragungskapazität als auch die dem Teilnehmer bereits zugeordneten Funkübertragungsressourcen, wie beispielsweise Zeitschlitze und Trägerfrequenzen, berücksichtigt.

Ein derart ausgewählter Zeitschlitz wird von der zweiten Kontrolleinrichtung MAC an die erste Kontrolleinrichtung RRM anhand einer Meldung CS-TS-Allocation-Confirmation zurückgemeldet - Schritt ST65 - die ihrerseits eine Meldung für den Teilnehmer MS vorbereitet, um ihm die neue Kanalkonfiguration mitzuteilen - Schritt ST 66. Diese Mitteilung erfolgt anhand einer Meldung DTM-Assignment-Command - Schritt ST67, wobei der Teilnehmer MS abschließend mit einer Meldung DTM-Assignment-Complete bestätigt - Schritt ST68.

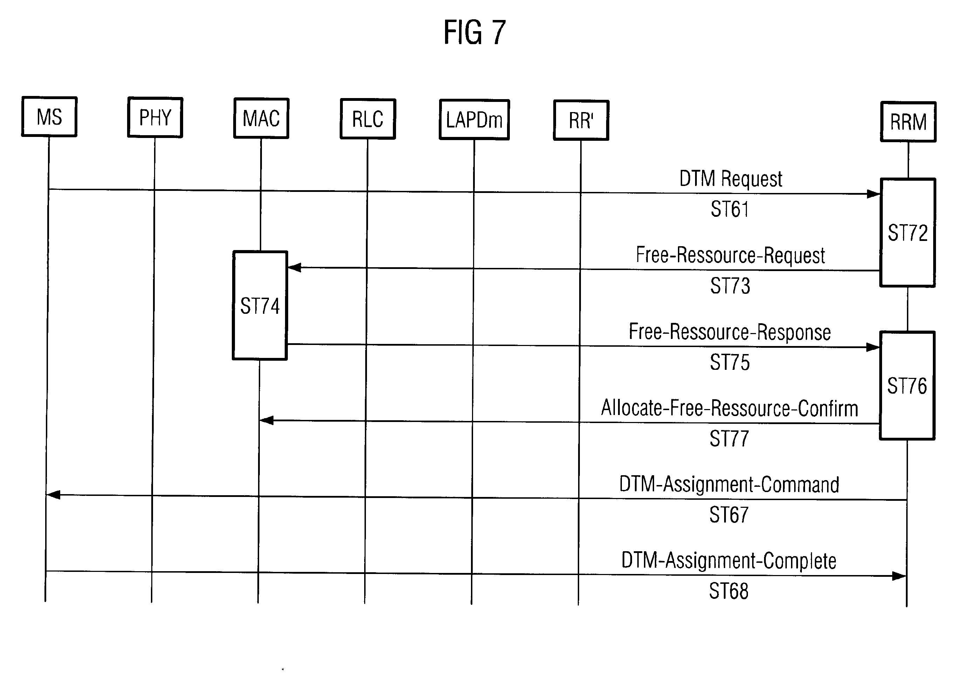

FIG 7 zeigt anhand eines Ablaufdiagramms eine siebte Ausgestaltungsform des erfindungsgemäßen Verfahrens im Vergleich zu FIG 6.

Abweichend zum in FIG 6 beschriebenen Schritt ST62 werden seitens der ersten Kontrolleinrichtung RRM Informationen über freie Zeitschlitze für die neu einzurichtende paketvermittelte Datenübertragung benötigt - Schritt ST72 und anhand einer Meldung Free-Ressource-Request bei der zweiten Kontrolleinrichtung MAC abgefragt - Schritt ST73.

Die zweite Kontrolleinrichtung MAC stellt freie Zeitschlitze für die einzurichtende paketvermittelte Datenübertragung zusammen - Schritt ST74 - und meldet diese anhand einer Meldung Free-Ressource-Response an die erste Kontrolleinrichtung RRM zurück - Schritt ST75.

Die erste Kontrolleinrichtung RRM wählt abhängig von der bereits eingerichteten leitungsvermittelten Datenübertragung entsprechend geeignete korrespondierende Zeitschlitz(e) für die einzurichtende paketvermittelte Datenübertragung aus-Schritt ST76 - und sendet eine Meldung Allocated-Free-Ressource-Confirm mit Informationen bezüglich der ausgewählten Zeitschlitze an die zweite Kontrolleinrichtung MAC zurück - Schritt ST77.

## Patentansprüche

1. Verfahren zur Zuordnung von Funkübertragungsressourcen in einem Funkkommunikationssystem,
- bei dem für eine leitungsvermittelte Datenübertragung einem Teilnehmer Funkübertragungsressourcen mit Hilfe einer ersten Kontrolleinrichtung (RRM) zugeordnet werden, und
- bei dem für eine paketvermittelte Datenübertragung dem Teilnehmer Funkübertragungsressourcen mit Hilfe einer zweiten Kontrolleinrichtung (MAC) zugeordnet werden,
**dadurch gekennzeichnet,**
- **dass** bei einer gleichzeitig durchzuführenden leitungsvermittelten und paketvermittelten Datenübertragung die Zuordnung der jeweiligen Funkübertragungsressourcen voneinander abhängig durchgeführt wird.

2. Verfahren nach Anspruch 1, **dadurch gekennzeichnet,**
- **dass** bei einer bestehenden paketvermittelten Datenübertragung (PS) für eine einzurichtende leitungsvermittelte Datenübertragung (CS) die erste Kontrolleinrichtung (RRM) freie Funkübertragungsressourcen der zweiten Kontrolleinrichtung (MAC) mitteilt (ST13),
- **dass** die zweite Kontrolleinrichtung (MAC) aus den mitgeteilten Funkübertragungsressourcen diejenigen auswählt, die zu den zugeordneten Funkübertragungsressourcen der paketvermittelten Datenübertragung korrespondieren (ST14) und diese ausgewählten Funkübertragungsressourcen an die erste Kontrolleinrichtung (RRM) zurückmeldet werden (ST15),
- **dass** die erste Kontrolleinrichtung (RRM) die zurückgemeldeten Funkübertragungsressourcen der einzurichtenden leitungsvermittelten Datenübertragung (CS) zuordnet und die erste Kontrolleinrichtung (RRM) dem Teilnehmer die Zuordnung mitteilt (ST17).

3. Verfahren nach Anspruch 1, **dadurch gekennzeichnet,**
- **dass** bei einer bereits bestehenden paketvermittelten Datenübertragung (PS) für eine einzurichtende leitungsvermittelte Datenübertragung (CS) bei der zweiten Kontrolleinrichtung (MAC) diejenigen Funkübertragungsressourcen abfragt werden (ST23,ST24), die der paketvermittelten Datenübertragung zugeordnet sind und diese an die erste Kontrolleinrichtung (RRM) zurückgemeldet werden (ST25),
- **dass** die erste Kontrolleinrichtung (RRM) für die einzurichtende leitungsvermittelte Datenübertragung Funkübertragungsressourcen derart zuordnet, dass diese zu den zurückgemeldeten Funkübertragungsressourcen der zweiten Kontrolleinrichtung korrespondieren (ST26), und
- **dass** die erste Kontrolleinrichtung (RRM) dem Teilnehmer die erfolgte Zuordnung mitteilt (ST17).

4. Verfahren nach Anspruch 3, **dadurch gekennzeichnet,**
- **dass** bei der zweiten Kontrolleinrichtung (MAC) zusätzlich freie Funkübertragungsressourcen ermittelt (ST33,ST34) und an die erste Kontrolleinrichtung (RRM) zurückgemeldet werden (ST35), und
- **dass** die erste Kontrolleinrichtung (RRM) eine Bestätigung an die zweite Kontrolleinrichtung (MAC) sendet (ST37).

5. Verfahren nach Anspruch 1, **dadurch gekennzeichnet,**
- **dass** bei einer bereits bestehenden paketvermittelten Datenübertragung (PS) für eine einzurichtende leitungsvermittelten Datenübertragung (CS) die zweite Kontrolleinrichtung (MAC) eine Auswahl an Funkübertragungsressourcen der ersten Kontrolleinrichtung (RRM) mitteilt (ST42,ST43),
- **dass** die erste Kontrolleinrichtung (RRM) Funkübertragungsressourcen für die einzurichtende kanalvermittelte Datenübertragung derart zuordnet, dass diese zu den mitgeteilten Funkübertragungsressourcen der zweiten Kontrolleinrichtung korrespondieren (ST44),
- **dass** die der kanalvermittelten Datenübertragung zugeordneten Funkübertragungsressourcen an die zweite Kontrolleinrichtung (MAC) zurückgemeldet werden (ST45), und
- **dass** die zweite Kontrolleinrichtung (MAC) dem Teilnehmer die erfolgte Zuordnung mitteilt (ST47).

6. Verfahren nach Anspruch 5, **dadurch gekennzeichnet, dass** in Abhängigkeit von den der kanalvermittelten Datenübertragung zugeordneten Funkübertragungsressourcen (ST45) die zweite Kontrolleinrichtung (MAC) eine erneute Zuordnung von Funkübertragungsressourcen für die paketvermittelte Datenübertragung vornimmt (ST46).

7. Verfahren nach Anspruch 1, **dadurch gekennzeichnet,**
- **dass** bei einer bereits bestehenden paketvermittelten Datenübertragung (PS) für eine einzurichtende leitungsvermittelte Datenübertragung (CS) bei der ersten Kontrolleinrichtung (RRM) freie Funkübertragungsressourcen abfragt und der zweiten Kontrolleinrichtung (MAC) mitgeteilt werden (ST53,ST54,ST55),
- **dass** die zweite Kontrolleinrichtung (MAC) aus den mitgeteilten Funkübertragungsressourcen diejenigen auswählt, die zu den zugeordneten Funkübertragungsressourcen der zweiten Kontrolleinrichtung (MAC) korrespondieren (ST56),
- **dass** die ausgewählten Funkübertragungsressourcen an die erste Kontrolleinrichtung (RRM) zurückgemeldet (ST57) und der einzurichtenden leitungsvermittelten Datenübertragung zugeordnet werden, und
- **dass** die zweite Kontrolleinrichtung (MAC) dem Teilnehmer die erfolgte Zuordnung mitteilt (ST47).

8. Verfahren nach Anspruch 1, **dadurch gekennzeichnet,**
- **dass** bei einer bereits bestehenden leitungsvermittelten Datenübertragung (CS) für eine einzurichtende paketvermittelte Datenübertragung (PS) bei der ersten Kontrolleinrichtung (RRM) freie Funkübertragungsressourcen ermittelt (ST61,ST62) und der zweiten Kontrolleinrichtung (MAC) mitgeteilt werden (ST63),
- **dass** die zweite Kontrolleinrichtung (MAC) aus den mitgeteilten Funkübertragungsressourcen diejenigen auswählt, die zu verwendbaren Funkübertragungsressourcen der zweiten Kontrolleinrichtung korrespondieren (ST64),
- **dass** die ausgewählten Funkübertragungsressourcen an die ersten Kontrolleinrichtung (RRM) zurückgemeldet werden (ST65),
- **dass** die verwendbaren Funkübertragungsressourcen der zweiten Kontrolleinrichtung der einzurichtenden paketvermittelten Datenübertragung zugeordnet werden, und
- **dass** die erste Kontrolleinrichtung (RRM) dem Teilnehmer die erfolgte Zuordnung mitteilt (ST67).

9. Verfahren nach Anspruch 1, **dadurch gekennzeichnet,**
- **dass** bei einer bereits bestehenden leitungsvermittelten Datenübertragung (CS) für eine einzurichtende paketvermittelte Datenübertragung (PS) bei der zweiten Kontrolleinrichtung (MAC) freie Funkübertragungsressourcen abfragt und der ersten Kontrolleinrichtung (RRM) mitgeteilt werden (ST73,ST74,ST75),
- **dass** die erste Kontrolleinrichtung (RRM) aus den mitgeteilten Funkübertragungsressourcen diejenigen auswählt, die zu den zugeordneten Funkübertragungsressourcen der ersten Kontrolleinrichtung korrespondieren (ST76) und diese ausgewählten Funkübertragungsressourcen an die zweite Kontrolleinrichtung (MAC) zurückgemeldet werden,
- **dass** die zurückgemeldeten Funkübertragungsressourcen der einzurichtenden paketvermittelten Datenübertragung zugeordnet werden (ST77), und
- **dass** die erste Kontrolleinrichtung (RRM) dem Teilnehmer die erfolgte Zuordnung mitteilt (ST67).
